(19) Europäisches Patentamt
European Patent Office
Office européen des brevets

(11) **EP 1 222 784 B1**

(12) **EUROPÄISCHE PATENTSCHRIFT**

(45) Veröffentlichungstag und Bekanntmachung des Hinweises auf die Patenterteilung:
**02.06.2004   Patentblatt 2004/23**

(21) Anmeldenummer: 00981143.1

(22) Anmeldetag: **04.10.2000**

(51) Int Cl.$^7$: **H04L 27/00**

(86) Internationale Anmeldenummer:
**PCT/DE2000/003499**

(87) Internationale Veröffentlichungsnummer:
**WO 2001/026314 (12.04.2001 Gazette 2001/15)**

(54) **VERFAHREN ZUR KANALENTZERRUNG MITTELS GIVENS ROTATION EINER DATENMATRIX**

METHOD FOR CHANNEL EQUALISATION USING GIVENS ROTATION OF A DATA MATRIX

PROCEDE DE CORRECTION DE CANAL EN APPLIQUANT UNE ROTATION GIVENS A UNE MATRICE DE DONNEES

(84) Benannte Vertragsstaaten:
**AT BE CH CY DE DK ES FI FR GB GR IE IT LI LU MC NL PT SE**

(30) Priorität: **06.10.1999  DE 19948373**

(43) Veröffentlichungstag der Anmeldung:
**17.07.2002   Patentblatt 2002/29**

(73) Patentinhaber: **Infineon Technologies AG**
**81669 München (DE)**

(72) Erfinder:
• **YANG, Bin**
**D-81735 München (DE)**
• **BOHNHOFF, Peter**
**81667 München (DE)**

(74) Vertreter: **Graf Lambsdorff, Matthias, Dr. et al**
**Lambsdorff & Lange,**
**Patentanwälte,**
**Dingolfinger Strasse 6**
**81673 München (DE)**

(56) Entgegenhaltungen:
• **BIN YANG: "An Improved Fast Algorithm for Computing the MMSE Decision-Feedback Equalizer" INTERNATIONAL JOURNAL OF ELECTRONICS AND COMMUNICATIONS, URBAN & FISCHER VERLAG, Nr. 6, 27. Juli 1999 (1999-07-27), Seiten 339-345, XP000994817**
• **FUYUN LING: "GIVENS ROTATION BASED LEAST SQUARES LATTICE AND RELATED ALGORITHMS" IEEE TRANSACTIONS ON SIGNAL PROCESSING,US,IEEE, INC. NEW YORK, Bd. 39, Nr. 7, 1. Juli 1991 (1991-07-01), Seiten 1541-1551, XP000240162 ISSN: 1053-587X**
• **CHEUNG J C S ET AL: "SOFT-DECISION FEEDBACK EQUALIZER FOR CONTINUOUS PHASE MODULATED SIGNALS IN WIDEBAND MOBILE RADIO CHANNELS" IEEE TRANSACTIONS ON COMMUNICATIONS,US,IEEE INC. NEW YORK, Bd. 42, Nr. 2/03/04, 1. Februar 1994 (1994-02-01), Seiten 1628-1638, XP000447396 ISSN: 0090-6778**
• **GU Y ET AL: "ADAPTIVE COMBINED DFE/MLSE TECHNIQUES FOR ISI CHANNELS" IEEE TRANSACTIONS ON COMMUNICATIONS,US,IEEE INC. NEW YORK, Bd. 44, Nr. 7, 1. Juli 1996 (1996-07-01), Seiten 847-857, XP000594720 ISSN: 0090-6778**
• **JOHN G. PROAKIS: "Digital Communications" 1995 , MCGRAW-HILL, INC. , NEW YORK XP002164181 ISBN: 0-07-113814-5 Seite 621 -Seite 622; Abbildungen 10-3-1 Seite 652 -Seite 654 Seite 664 -Seite 668**

**Beschreibung**

Die Erfindung betrifft ein Verfahren zur Kanalentzerrung von Empfangsdaten, die über einen Übertragungskanal übertragen werden, bei dem Einstellkoeffizienten von Filtern und Entzerrern mit geringem Rechenaufwand und hoher Rechengeschwindigkeit ermittelt werden.

Ein schwerwiegendes Problem bei Kommunikationssystemen besteht in der Mehr-Wege-Signalausbreitung.

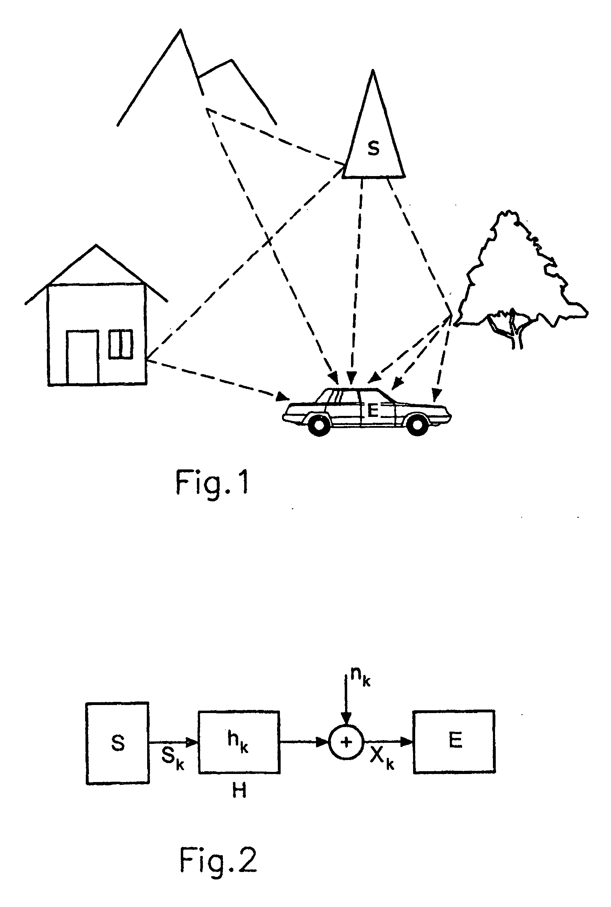

Fig.1 dient zur Erläuterung der Problematik der Mehr-Wege-Ausbreitung. Zwischen einem Sender bzw. einer Basisstation S und einer Mobilstation als Empfänger E gibt es in der Regel mehrere mögliche Signalausbreitungswege. Reflexion und Streuung von Signalwellen an Gebäuden, Bergen, Bäumen und anderen Hindernissen führen dazu, daß sich die Empfangsfeldstärke aus mehreren, im allgemeinen unterschiedlich starken und unterschiedlich verzögerten Signalkomponenten zusammensetzt.

Der Übertragungskanal zwischen dem Sender S und dem Empfänger E kann zur Berücksichtigung der Mehr-Wege-Ausbreitung als ein Übertragungsfilterkanal H mit Kanalkoeffizienten $h_k$ modelliert werden, wie er in Fig. 2 dargestellt ist. Ein Sender S gibt Sendedaten bzw. Sendesymbole $S_k$ über den Übertragungskanal H an einen Modell-Sumierer ab, der die Oberlagerung der mit $h_k$ gefilterten Sendesymbole $S_k$ durch ein Rauschsignal berücksichtigt. Die Sende-Datensymbole $S_k$ können mehrere Zustände aufweisen, beispielsweise acht Zustände, die mit 3 Bit kodiert werden. Das Rauschsignal $h_k$ stellt ein additives, weißes Gauß-Rauschen mit einer Varianz $\sigma_n^2$ dar, wobei sie zu den Sende-Signalsymbolen $S_k$ unkorreliert sind.

Die durch den Übertragungskanal H gefilterten und mit Rauschen überlagerten Sende-Signale $S_k$ werden als Empfangssignal $X_k$ durch den Empfänger empfangen.

Es gilt:

$$X_k = \sum_{i=0}^{L} h_i s_{k-i} + n_k \qquad (1)$$

wobei L die Ordnung des modellierten Übertragungskanalfilters H darstellt. Wie man aus Gleichung 1 erkennen kann, besteht bei den Empfangsdaten das Problem der Intersymbol-Interferenz (ISI), da $X_k$ nicht nur von $S_k$ sondern auch von $S_{k-1}...$, $S_{k-L}$ abhängt. Die Intersymbol-Interferrenz (ISI) führt, sofern sie nicht kompensiert wird, zu hohen Bit-Fehlerraten. Zur Beseitigung der Intersymbol-Interferenz wird innerhalb des Empfängers E ein Entzerrer eingesetzt. Üblicherweise handelt es sich dabei um lineare Entzerrer, Entscheidungs-Rückkoppelentzerrer (DFE: Decision-Feedback Equalizer) oder um sogenannte Viterbi-Entzerrer.

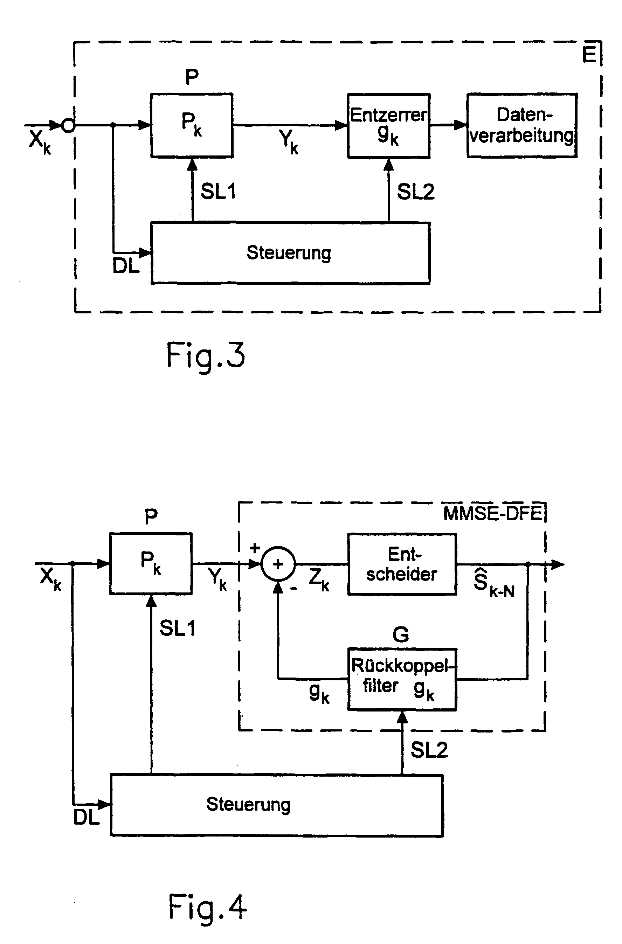

Fig. 3 zeigt schematisch den inneren Aufbau eines herkömmlichen Empfängers nach dem Stand der Technik. Das Empfangssignal $X_k$ gelangt über eine interne Leitung zu einem Vorfilter P mit Filterkoeffizienten $P_k$. Das durch den Vorfilter P gefilterete Eingangssignal $Y_k$ wird einem Entzerrer zugeführt und entzerrt. Das entzerrte Signal wird von dem Entzerrer über eine interne Leitung zur internen Datenverarbeitung an eine Datenverarbeitungsschaltung abgegeben. Das Vorfilter P ist ein FIR-Filter und kann mit folgender Gleichung beschrieben werden:

$$Y_k = \sum_{i=0}^{N} p_i x_{k-i} \qquad (2)$$

Die Einstellung der Filterkoeffizienten $P_k$ erfolgt durch eine Steuerung über eine Steuerleitung SL1. Die Einstellung des Entzerrers erfolgt ebenfalls durch die interne Steuerung über eine Steuerleitung SL2. Hierzu erhält die Steuerung über eine interne Datenleitung DL das Empfangssignal x(k) und wertet dieses zur Einstellung der Filterkoeffizienten $P_k$ sowie der Entzerrerkoeffizienten $g_k$ aus.

Die Ordnung des Vorfilters P beträgt N und wird durch die Hardwarekonfiguration des Vorfilters P festgelegt.

Bei dem Entzerrer handelt es sich beispielsweise um einen Viterbi-Entzerrer, der den sogenannten Viterbi-Algorithmus verwendet. Bei einem Viterbi-Entzerrer steigt die Anzahl der notwendigen Rechenoperationen exponentiell mit der Anzahl der Übertragungskanalkoeffizienten h. Genauer gesagt steigt die Anzahl der notwendigen Rechenoperationen bei dem Viterbi-Algorithmus proportional zu der Datenübertragungsrate und potenzartig mit $m^{L+1}$ an, wobei m die Anzahl der möglichen Datensignalzustände des Symboles S darstellt. Da die Ordnung eines realen Übertragungskanals L relativ hoch ist und somit der Rechenaufwand des Viterbi-Algorithmus sehr groß wird, werden Viterbi-Entzerrer zur Minimierung des Rechenaufwands häufig so eingesetzt, daß die letzten Kanalkoeffizienten nicht berücksichtigt bzw. abgeschnitten werden. Dabei verschlechtert sich naturgemäß die Güte der Entzerrung des Empfangssignals. Alternativ zu Viterbi-Entzerrern werden bei Empfängern E nach dem Stand der Technik MMSE-DFE-Entzerrer (MMSE-DFE: minimum mean square decision feedback equalizer) insbesondere bei xDSL-Empfängern eingesetzt.

Fig.4 zeigt den interen Aufbau eines derartigen MMSE-DFE-Entzerrers im Detail. Der MMSE-DFE enthält einen Subtrahierer, der von dem durch den Vorfilter P gefilterten Empfangssignal y(k) ein von einem Rückkoppelfilter G gefiltertes Rückkoppelfiltersignal $g_k$ subtrahiert und über eine interne Leitung einer Entscheidungseinrichtung, beispielsweise einer Schmitt-Trigger-Schaltung, zuführt. Der Rückkopplungsfilter G weist dieselbe Ordnung wie der Übertragungskanal auf, nämlich L.

Der Rückkopplungsfilter G kann beschrieben werden mit der folgenden Gleichung:

$$q_k = \sum_{i=1}^{L} g_i s_{k-N-i} \qquad (3)$$

Das Eingangssignal $Z_k$ der Entscheidungseinrichtung ergibt sich demnach wie folgt:

$$Z_k = \sum_{i=0}^{N} p_i x_{k-i} - \sum_{i=1}^{L} g_i s_{k-N-i} \qquad (4)$$

Die Filterkoeffizienten $P_k$, $g_k$ werden derart eingestellt, daß $Z_k$ möglichst der Sendesignalfolge $S_{k-N}$ entspricht. Die Abweichung $e_k$ ergibt sich wie folgt:

$$e_k = S_{k-N} - Z_k = \sum_{i=0}^{L} g_i s_{k-N-i} - \sum_{i=0}^{N} p_i x_{k-i} \qquad (g_0 \equiv 1) \qquad (5)$$

Zur Berechnung der Vorfilterkoeffizienten $P_k$ und der Rückkopppelfilterkoeffizienten $g_k$ aus dem Übertragungssignalkanal-Impulsantwortkoeffizienten $h_0$, $h_1$ ... $h_L$ sowie dem Signal-Rauschverhältnis wird die Leistung bzw. das zweite Moment der Abweichungssignalfolge minimiert.

Auch bei MMSE-DFE ist der Rechenaufwand erheblich, so daß sie bei realen Datenübertragungskanälen mit hoher Übertragungskanalordnung L nicht eingesetzt werden können.

In den nachfolgend zitierten Schriften ist der allgemeine Stand der Technik, auf welchen sich die vorliegende Erfindung bezieht, näher beschrieben.

In dem zu der vorliegenden Erfindung den nächstliegenden Stand der Technik darstellenden Artikel "Givens Rotation Based Least Squares Lattice and Related Algorithms" von Fuyun Ling, erschienen in IEEE Transactions on Signal Processing, Bd. 39, Nr. 7, 1991, Seiten 1541-1551, sind Berechnungen von Koeffizienten eines Least-Squares-Entzerrers durch Bildung einer Dreiecksmatrix beschrieben. Die Berechnungen erfolgen durch Anwendung mehrerer aufeinanderfolgender GIVENS-Matrixrotationen auf eine Datenmatrix, die mit empfangenen Datensymbolen gefüllt ist. Die Koeffizienten des Entzerrers können nach Durchführung der GIVENS-Rotationen aus der Dreiecksmatrix ausgelesen werden.

In dem Artikel "Soft-Decision Feedback Equalizer for Continuous Phase Modulated Signals in Wideband Mobile Radio Channels" von Joseph C. S. Cheung und Raymond Steele, erschienen in IEEE Transactions on Communications, Bd. 42, Nr. 2/3/4, 1994, Seiten 1628-1638, wird vorgeschlagen, zur Entzerrung von CPM (Continuous Phase Modulation)-Signalen ein Decision-Feedback-Entzerrer (DFE) mit einem Viterbi-Algorithmus zu kombinieren.

Der Artikel "Adaptive Combined DFE/MLSE Techniques for ISI Channels" von Yonghai Gu und Tho Le-Ngoc, erschienen in IEEE Transactions on Communications, Bd. 44, Nr. 7, 1996, Seiten 847-857, hat einen Decision-Feedback-Entzerrer zum Gegenstand, welcher in einen Empfänger integriert ist, der zur Durchführung einer Maximum-Likelihood-Schätzung von Datenfolgen ausgelegt ist.

Es ist die Aufgabe der vorliegenden Erfindung ein Verfahren zur Kanalentzerrung zu schaffen, bei dem der Rechenaufwand zur Bestimmung von Einzelkoeffizienten derart vermindert wird, daß herkömmliche Filter und Entzerrer zur Kanalentzerrung von Empfangsdaten einsetztbar sind, die über einen Übertragungskanal mit hoher Ordnung übertragen werden.

Diese Aufgabe wird erfindungsgemäß durch ein Verfahren mit den im Patentanspruch 1 angegebenen Merkmalen gelöst.

Weitere vorteilhafte Ausgestaltungen des erfindungsgemäßen Verfahrens sind in den Unteransprüchen angegeben.

Die Erfindung betrifft ein Verfahren zur Kanalentzerrung von Empfangsdaten, die über einen Übertragungskanal übertragen werden, mit den folgenden Schritten:

(a) Empfangen der Empfangsdaten in einem Empfangs-Datenpaket;

(b) Bestimmen von Kanalparametern des Übertragungskanals aus den Empfangsdaten und Zwischenspeichern der Kanalparameter in einem Datenfeld;

(c) Berechnen von Filter-Einstellkoeffizienten eines Vorfilters und von Entzerrer-Einstellkoeffizienten eines Entzerrers durch GIVENS-Rotation des Datenfeldes;

(d) Einstellen des Vorfilters und des Entzerrers mit den berechneten Koeffizienten;

(e) Entzerren der Empfangsdaten durch den eingestellten Filter und den eingestellten Entzerrer.

Bei einer bevorzugten Weiterbildung des erfindungsgemäßen Verfahrens werden als Kanalparameter die komplexwertigen Kanal-Koeffizienten h der Übertragungskanal-Impulsantwort und das Signal-Rauschverhältnis SNR des Übertragungskanals annähernd bestimmt.

Vorzugsweise werden die Kanalparameter h in ein zweidimensionales aus Datenzeilen und Datenspalten bestehendes Datenfeld mit einer Vielzahl von Datenelementen $d_{nm}$ mit $0 \leq n \leq 1$ und $0 \leq - m \leq N+L+1$ zwischengespeichert, wobei die Anzahl S der Datenspalten von der Ordnung N des Rohrfilters und der Ordnung L des Übertragungskanals abhängt und die Anzahl Z der Datenzeilen festgelegt ist.

Vorzugsweise beträgt die Anzahl S der Datenspalten:

$$S=N+L+2$$

Die Anzahl Z der Datenzeilen beträgt vorzugsweise zwei.

Bei einer weiteren bevorzugten Weiterbildung des erfindungsgemäßen Verfahrens werden in der ersten Zeile des Datenfeldes als Datenelemente $d_{0m}$ die Produkte der konjugiertkomplexwertigen Kanal-Koeffizienten h* und der Wurzel des Signal-Rauschverhältnises SNR zwischengespeichert, und in der zweiten Zeile des Datenfeldes werden als Datenelemente die komplexwertigen Übertragungskanalkoeffizienten h zwischengespeichert.

Die GIVENS-Rotation des Datenfeldes wird bei der Berechnung der Koeffizienten vorzugsweise in mehreren GIVENS-Rotationsschritten durchgeführt, wobei die Anzahl der GIVENS-Rotationsschritte von der Ordnung N des Vorfilters abhängt.

Bei einer bevorzugten Weiterbildung des erfindungsgemäßen Verfahrens wird zwischen jedem GIVENS-Rotationsschritt jedes Datenelement $d_{nm}$ der zweiten Zeile innerhalb des Datenfeldes um eine Datenelementposition nach links verschoben.

Diejenigen Datenelemente, die nach dem letzten GIVENS-Rotationsschritt in der ersten Zeile des Datenfeldes zwischengespeichert sind, werden vorzugsweise als berechnete Koeffizienten zur Einstellung des Vorfilters und des Entzerrers ausgelesen.

Bei einer bevorzugten Weiterbildung des erfindungsgemäßen Verfahrens werden nach dem letzten GIVENS-Rotationsschritt die Datenelemente $d_{01}$, $d_{02}$, ...$d_L$ in der ersten Zeile und in den Spalten 1 bis L des Datenfeldes als Einstellkoeffizienten des Entzerrers und die Datenelemente $d_{0,L+1}$; $d_{0,L+2}$ ... $d_{0,L+N+1}$ in der ersten Zeile und in den Spalten (L+1) bis Spalte (L+N+1) als Einstellkoeffizienten des Vorfilters ausgelesen.

Durch die berechneten Filterkoeffizienten werden vorzugsweise FIR-Filter eingestellt. Vorzugsweise weist der einstellbare Entzerrer eine Entscheidungseinrichtung und einen Rückkoppelfilter auf, der durch die berechneten Entzerrer-Einstellkoefizienten eingestellt wird.

Gemäß einer weiteren Ausbildung des erfindungsgemäßen Verfahrens ist der Entzerrer ein Viterbi-Entzerrer, der durch die berechneten Entzerrer-Einstellkoeffizienten eingestellt wird.

Die Empfangs-Datenpakete werden vorzugsweise in einem Zeitmultiplexbetrieb übertragen.

Der Entzerrer ist vorzugsweise ein EDGE-Entzerrer, der durch die berechneten Entzerrer-Einstellkoeffizienten eingestellt wird.

Bei dem erfindungsgemäßen Verfahren werden vorzugsweise die Empfangsdaten nach einem DSL-Datenkommunikationsstandard über den Übertragungskanal übertragen.

Vorzugsweise sind das Vorfilter und der Entzerrer in Reihe geschaltet und bilden einen MMSE-DFE-Entzerrer.

Bei einer weiteren bevorzugten Weiterbildung des erfindunggemäßen Verfahrens werden die Filter-Einstellkoeffizienten und die Entzerrer-Einstellkoeffizienten derart berechnet, daß die Bit-Fehlerrate aufgrund der Kanalentzerrung minimiert wird.

Die Anzahl der Rechenoperationen bei der Berechnung der Einstellkoeffizienten ist bei dem erfindungsgemäßen Verfahren vorzugsweise proportional zu dem Produkt aus der Ordnung N des Vorfilters und der Summe L+N der Ordnung L des Übertragungskanals und der Ordnung N des Vorfilters.

Im weiteren werden bevorzugte Ausführungsformen des erfindungsgemäßen Verfahrens unter Bezugnahme auf die beigefügten Zeichnungen zur Erläuterung erfindungswesentlicher Merkmale beschrieben.

Es zeigen:

Fig.1     eine schematische Darstellung zur Erläuterung der Problematik bei der Mehr-Wege-Signalausbreitung;

Fig.2     ein Übertragungskanalmodell zur Modellierung des in Fig.1 gezeigten Übertragungskanals;

Fig.3     ein Blockschaltbild zur Darstellung eines Empfängers nach dem Stand der Technik;

Fig.4     einen Empfänger mit einem MMSE-DFE-Entzerrer nach dem Stand der Technik;

Fig.5     ein Ablaufdiagramm des erfindungsgemäßen Verfahrens;

Fig.6     ein Ablaufdiagramm zur Berechnung der einstellbaren Koeffizienten gemäß dem erfindungsgemäßen Verfahren.

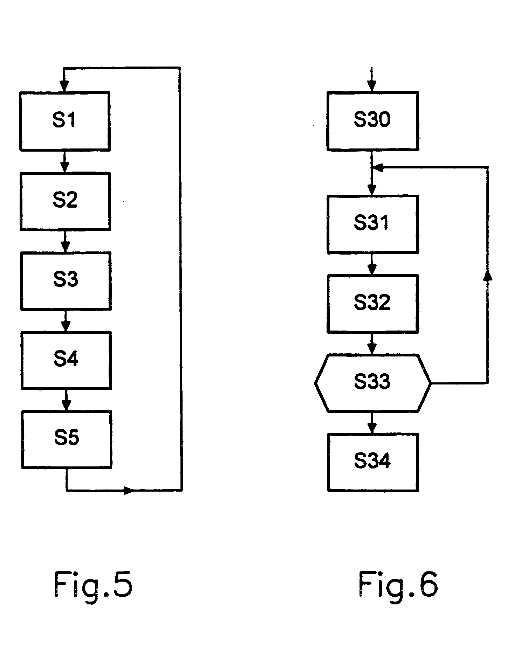

Fig.5 stellt das erfindungsgemäße Verfahren zur Kanalentzerrung von Empfangsdaten gemäß der vorliegenden Erfindung dar.

Im Schritt S1 empfängt der Empfänger E Empfangsdaten in einem Empfangsdatenpaket. Die Empfangsdaten $X_k$ werden in Datenpaket-Blöcken übertragen. Die Datenpaket-Blöcke werden in Zeitschlitzen eines Zeitmultiplexübertragungssystems übertragen, wie es beispielsweise im Bereich des Mobilfunks eingesetzt wird.

Aus den empfangenen Empfangsdaten $X_k$ werden im Schritt S2 Kanalparameter für den Übertragungskanal des Kanals H bestimmt bzw. geschätzt und in einem Datenfeld in einem Zwischenspeicher gespeichert. Bei den zwischengespeicherten Kanalparametern handelt es sich vorzugsweise um die komplexwertigen Kanal-Koeffizienten h der Übertragungskanal-Impulsantwort sowie um das Signal-Rauschverhältnis SNR des Übertragungskanals H.

Das Signal-Rauschverhältnis SNR wird durch das Verhältnis der Varianz $\sigma_s^2$ der statistisch unabhängigen Sendesymbole $S_k$ und durch die Varianz $\sigma_n^2$ für das Rauschsignal $n_k$ bestimmt.

$$SNR = \frac{\sigma_p^2}{\sigma_n^2} \qquad (6)$$

Das zweidimensionale Datenfeld ist eine Daten-Matrix mit mehreren Daten-Zeilen und Daten-Spalten. Die Anzahl S der Daten-Spalten hängt dabei von der Ordnung N des Vorfilters P und der Ordnung L des Übertragungskanals H ab, wobei gilt:

$$S = N + L + 2 \qquad (7)$$

Die Anzahl Z der Daten-Zeilen des Datenfeldes beträgt:

$$Z = 2 \qquad (8)$$

Die Belegung der Datenelemente $d_{nm}$ mit $0 \leq n \leq 1$ und $0 \leq m \leq N+L+1$ beim Zwischenspeichern der Kanalparameter folgt bei dem erfindungsgemäßen Verfahren einer vorbestimmten Systematik. Im folgenden ist beispielhaft ein Datenfeld D nach dem Zwischenspeichern der Kanalparameter für einen Übertragungskanal mit der Ordnung L=2 und einem Vorfilter der Ordnung L=4 dargestellt.

$$D_0 = \begin{bmatrix} \dfrac{1}{\sqrt{SNR}} & 0 & 0 & 0 & 0 & h^*_2 \cdot \sqrt{SNR} & h^*_1 \cdot \sqrt{SNR} & h^*_0 \cdot \sqrt{SNR} \\ \text{------------------------} \\ h_0 & h_1 & h_2 & 0 & 0 & 0 & 0 & 0 \end{bmatrix} \qquad (9)$$

$$\underleftrightarrow{\qquad L+1 \qquad} \underleftrightarrow{\qquad\qquad N+1 \qquad\qquad}$$

Nach dem Zwischenspeichern der Kanalparameter in das Datenfeld $D_0$ werden die Filtereinstellkoeffizienten $P_k$ des Vorfilters P und die Entzerrereinstellkoeffizienten $g_k$ eines Entzerrers bei dem erfindungsgemäßen Verfahren in Schritt S3 durch GIVENS-Rotation des Datenfeldes D berechnet. Die GIVENS-Rotation des Datenfeldes D wird im Detail nachfolgenden im Zusammenhang mit Fig.6 beschrieben.

Nach Durchführung der Berechnung der Einstellkoeffizienten wird im Schritt S4 das Vorfilter P und der Entzerrer mit den berechneten Koeffizienten eingestellt.

Im Schritt S5 werden die empfangenen Empfangsdaten $X_k$ eines empfangenen Empfangs-Datenpakets durch den eingestellten Vorfilter P und den eingestellten Entzerrer entzerrt und zur weiteren Datenverarbeitung an eine nachfolgende Datenverarbeitungsschaltung DV abgegeben. Danach kehrt das erfindungsgemäße Verfahren zur Kanalentzerrung zu Schritt S1 zum Empfang der Empfangsdaten des nächsten Empfangs-Datenpakets zurück.

Im weiteren wird die Berechnung der Einstellkoeffizienten für den Vorfilter und den Entzerrer unter Bezugnahme auf die Fig. 6 im Detail beschrieben. Dabei zeigt Fig. 6 die Einzelschritte des Berechnungsschrittes S3 in Fig.5.

Im Schritt S30 wird das zwischengespeicherte Datenfeld $D_0$ mit den darin zwischengespeicherten im Schritt S2 bestimmten Kanalparametern zur Durchführung einer GIVENS-Rotation, wie oben dargestellt, eingelesen. Das Datenfeld $D_0$ weist zwei Zeilen sowie L+N+2 Spalten auf, wobei L die Ordnung des Übertragungskanals und M die Ordnung des Vorfilters ist. In dem Datenfeld $d_{00}$ in der ersten Zeile und in der ersten Spalte des Datenfeldes $D_0$ befindet sich der inverse Wert der Wurzel des Signal-Rauschverhältnisses SNR des Übertragungskanals. In den letzten (L+1)-ten-Spalten innerhalb der ersten Zeile des Datenfeldes $D_0$ wird jeweils das Produkt des konjugierten Wertes h* der komplexwertigen Kanalkoeffizienten h mit der Wurzel des Signal-Rauschverhältnisses SNR abgespeichert. Die übrigen Datenelemente d des Datenfeldes $D_0$ innerhalb der ersten Zeile werden mit null belegt.

Innerhalb der zweiten Zeile des Datenfeldes $D_0$ werden die Datenelemente d der ersten (L+1)-ten-Spalten mit den komplexwertigen Kanalkoeffizienten $h_0$, $h_1$ ... des Datenübertragungskanals H gefüllt. Die übrigen (N+1)-ten-Datenelemente d des Datenfeldes $D_0$ werden mit null belegt.

Die GIVENS-Rotation besteht aus mehreren GIVENS-Rotationsschritten bei der das Datenfeld $D_0$ schrittweise entsprechend einer vorbestimmten mathematischen Vorschrift verändert wird. Die Durchführung der GIVENS-Rotation wird im Detail in G. Golub "Matrix computations", 1983, John Hopkins press beschrieben. Im folgenden wird die mathematische Vorschrift zur Durchführung eines Givens-Rotationschrittes angegeben:

$$D_0 = \begin{bmatrix} r_0 & r_1 & r_2 \ldots \\ \\ x_0 x_1 x_2 \ldots \end{bmatrix} \xrightarrow{\quad G \quad} D_1 = \begin{bmatrix} \bar{r}_0 & \bar{r}_1 & \bar{r}_2 \ldots \\ \\ 0 & \bar{x}_1 & \bar{x}_2 \ldots \end{bmatrix} \qquad (10)$$

Das Datenfeld $D_0$ wird durch den GIVENS-Rotationsschritt G in ein Datenfeld D, überführt.

Dabei lautet die Vorschrift für die erste Spalte des Datenfeldes

Spalte 0:

$$\bar{r}_0 = \sqrt{r_0^2 + |x_0|^2} \qquad (11)$$

$$c = r_0/\bar{r}_0 \qquad (12)$$

$$s = x_0/\bar{x}_0 \qquad (13)$$

Die übrigen Spalten des Datenfeldes werden entsprechend der folgenden mathematischen Vorschriften verändert:

Spalte i = 1, 2 ...:

$$\bar{r}_c = c \cdot r_i + s^* \cdot x_i \qquad (14)$$

$$\bar{x}_i = -s \cdot r_i + c \cdot x_i \,, \qquad (15)$$

wobei s* der komplex-konjugierte Koeffizient von S ist.

Die Durchführung eines derartigen GIVENS-Rotationsschrittes erfolgt im Schritt S31, wie in Fig. 6 dargestellt ist. Nach der Durchführung des GIVENS-Rotationschrittes S31 wird im Schritt S32 jedes Datenelement d innerhalb der zweiten Zeile des Datenfeldes D um eine Position nach links verschoben und die freiwerdenden Datenelemente mit null belegt. Im Schritt S33 erfolgt eine Abfrage ob die GIVENS-Rotationsschritte S31 und der Zeilenverschiebungsschritt S32 (N+1)-mal ausgeführt worden sind, wobei N die Ordnung des vorfilters darstellt. Falls der interne Schleifenzähler kleiner als N+1 ist, kehrt der Ablauf zu Schritt S31 zurück und im anderen Falle werden im Schritt S34 bestimmte Datenelemente des rotierten Datenfeldes zur Einstellung der Koeffizienten ausgelesen. Das rotierte Datenfeld weist nach Durchführung von (N+1)-Rotationsund Verschiebungsschritten die folgende Form auf:

$$D_{N+1} = \begin{bmatrix} g_0 g_1 \cdots g_2 & p_0 & p_1 & p_2 & p_3 & p_4 \\ \text{-------------------} \\ 0 & \bar{x} \cdots \bar{x} & \bar{x} & \bar{x} & \bar{x} & \bar{x} & \bar{x} \end{bmatrix} \qquad (16)$$

Die Datenelemente $d_1$, $d_2$ ... $d_{0L}$ in der ersten Zeile in den Spalten 1 bis L des Datenfeldes $D_{N+1}$ werden im Schritt S34 nach Durchführung des letzten GIVENS-Rotationsschrittes als Einstellkoeffizienten $g_1$, $g_2$..... $g_L$ des Entzerrers ausgelesen. Die Datenelemente $d_{0,L+1}$; $d_{0,L+2}$..... $d_{0,L+N+1}$ in der ersten Zeile und in den Spalten (L+1) bis Spalte (L+N+1) des Datenfeldes $D_{N+1}$ werden als Einstellkoeffizienten $p_0$, $p_1$ ...$p_N$ des Vorfilters P im Schritt S34 ausgelesen. Die ausgelesenen Entzerrer-Einstellkoeffizienten $g_1$, $g_2$,... $g_L$ können zur Einstellung eines Viterbi-Entzerrers, eines EDGE-Entzerrers oder des Rückkoppelfilters eines MMSE-DFE-Entzerrers verwendet werden.

Die Filtereinstellkoeffizienten $p_0$, $p_1$ ... $p_N$ werden zur Einstellung der Koeffizienten des FIR-Vorfilters herausgelesen. Die berechneten Filter-Einstellkoeffizienten $p_0$, $P_1$ ... $P_N$ sowie die Entzerrer-Einstellkoeffizienten $g_1$, $g_2$, ...$g_L$ werden bei den Berechnungsschritt S3 des erfindunggemäßen Verfahrens derart berechnet, daß die BIT-Fehlerrate des Empfangssignals aufgrund der Kanalverzerrung minimiert wird. Die Anzahl der Rechenoperationen bei der Berechnung der Einstellkoeffizienten g, p ist dabei sehr gering.

Die Anzahl der Rechenoperation ist proportional zu dem Produkt der Ordnung N des Vorfilters P und der Summe (L + N) der Ord-nung des Übertragungskanals H, der Ordnung N des Vorfilters P.

Die Anzahl der Rechenoperationen bei herkömmlichen Empfängern, die beispielsweise einen Viterbi-Verzerrer oder einen MMSE-DFE-Entzerrer enthalten, steigt prozentartig an:

$$\text{Rechenaufwand} \sim (N+L)^3 \tag{17}$$

Demgegenüber steigt die Anzahl der Rechenoperation bei dem erfindungsgemäßen Verfahren proportional entsprechend folgender Gleichung an:

$$\text{Anzahl der Rechenoperationen} \sim N(N+L) \tag{18}$$

Ein typischer Wert für die Ordnung L des Übertragungskanal liegt bei Mobilfunkübertragungen bei L =5, wobei Vorfilter beispielsweise mit einer Ordnung N = 20 eingesetzt werden. Die Verminderung des Rechenaufwands wird ausgedrückt als Verhältnis der Anzahl der notwendigen Rechenoperationen und beträgt demnach:

$$\text{Rechenaufwandsverminderung} = -\frac{(N+L)^3}{N(N+L)} \tag{19}$$

mit L=5 und N=20 wird der Rechenaufwand durch das erfindungsgemäße Verfahren gegenüber herkömmlichen Empfängern um einen Faktor 31 erhöht. Durch die Verminderung der Anzahl der notwendigen Rechenoperation und der damit einhergehenden Erhöhung der Rechengeschwindigkeit können somit auch bei Echtheitsanwendungen wie Mobilfunktelefonen, die im Vollduplex-Betrieb arbeiten, auch bei realen Übertragungskanälen mit höheren Übertragungskanalordnungen L MMSE-DFE-Entzerrer oder Viterbi-Entzerrer eingesetzt werden. Hierdurch kann die BIT-Fehlerrate bei der Datenübertragung erheblich abgesenkt werden.

Die Rechengeschwindigkeit kann weiter erhöht werden bzw. die Anzahl der Rechenoperationen kann erniedrigt werden, indem man statt der konventionellen GIVENS-Rotation (siehe Gleichungen 11-15 )eine sogenannte wurzelfreie GIVENS-Rotation verwendet, bei der die Wurzeloperation in Gleichung (11) vermieden wird.

Das erfindungsgemäße Verfahren kann bei der Entzerrung beliebiger Empfangsdaten innerhalb von Empfangsdatenpaketen eines Zeit-Multiplex-Übertragungsystems eingesetzt werden. Die Daten können dabei beispielsweise mittels DSL-Datenkommunikationsstandards übertragen werden.

**Patentansprüche**

**1.** Verfahren zur Kanalentzerrung von Empfangsdaten, die über einen Übertragungskanal H übertragen werden, mit den folgenden Schritten:

(a) Empfangen (S1) der Empfangsdaten in einem Empfangsdatenpaket;

(b) Berechnen (S3) von Filter-Einstellkoeffizienten (p) eines Vorfilters (P) und von Entzerrer-Einstellkoeffizienten (g) eines Entzerrers;

(c) Einstellen (S4) des Vorfilters (P) und des Entzerrers mit den berechneten Koeffizienten (p, g);

(d) Entzerren (S5) der Empfangsdaten durch das eingestellte Vorfilter (P) und den eingestellten Entzerrern;

**dadurch gekennzeichnet,**
**daß** Kanalparameter des Übertragungskanals (H) aus den Empfangsdaten $X_k$ bestimmt werden (S2) und die Kanalparameter in einem Datenfeld (D) gespeichert werden, und
**daß** die Filter-Einstellkoeffizienten (p) des Vorfilters (P) und die Entzerrer-Einstellkoeffizienten (g) des Entzerrers durch GIVENS-Rotation des Datenfeldes (D) berechnet werden.

2. Verfahren nach Anspruch 1, bei dem als Kanalparameter die komplexwertigen Kanal-Koeffizienten h der Übertragungskanal-Impulsantwort und das Signal-Rauschverhältnis SNR des Übertragungskanals H annähernd bestimmt werden.

3. Verfahren nach Anspruch 1 oder 2,
   **dadurch gekennzeichnet,**
   **daß** die Kanalparameter in ein zweidimensionales aus Datenzeilen und Datenspalten bestehendes Datenfeld D mit Datenelementen $d_{nm}$ gespeichert werden, wobei $0 \leq n \leq 1$ und $0 - \leq m \leq N+L+1$ gilt und wobei die Anzahl S der Datenspalten von der Ordnung N des Vorfilters und der Ordnung L des Übertragunskanals H abhängt und die Anzahl Z der Datenzeilen festgelegt ist.

4. Verfahren nach Anspruch 2 und 3,
   **dadurch gekennzeichnet,**
   **daß** in der ersten Zeile des Datenfeldes D als Datenelemente die Produkte für konjugiert-komplexwertige Kanal-Koeffizienten h* und der Wurzel des Signal-Rauschverhältnisses SNR sowie in der zweiten Zeile des Datenfeldes D als Datenelemente die komplexwertigen Übertragungs-Kanalkoeffizienten h des Übertragunskanals H zwischengespeichert werden.

5. Verfahren nach einem der vorangehenden Ansprüche,
   **dadurch gekennzeichnet,**
   **daß** die GIVENS-Rotation des Datenfeldes D in mehreren GIVENS-Rotationsschritten durchgeführt wird, wobei die Anzahl der GIVENS-Rotationsschritte von der Ordnung N des Vorfilters P abhängt.

6. Verfahren nach Anspruch 3 und 5,
   **dadurch gekennzeichnet,**
   **daß** zwischen jedem GIVENS-Rotationsschritt jedes Datenelement der zweiten Zeile innerhalb des Datenfeldes D um eine Position nach links verschoben wird.

7. Verfahren nach Anspruch 3 und Anspruch 5 oder 6,
   **dadurch gekennzeichnet,**
   **daß** diejenigen Datenelemente, die nach dem letzten GIVENS-Rotationsschritt in der ersten Zeile des Datenfeldes D zwischengespeichert sind, als die berechneten Einstellkoeffizienten zum Einstellen des Vorfilters P und des Entzerrers ausgelesen werden.

8. Verfahren nach Anspruch 3 und einem der Ansprüche 5 bis 7,
   **dadurch gekennzeichnet,**
   **daß** nach dem letzten GIVENS-Rotationsschritt die Datenelemente $d_{01}$, $d_{02}$ ... $d_L$ in der ersten Zeile und in den Spalten 1 bis L des Datenfeldes als Einstell-Koeffizienten des Entzerrers und die Datenelemente $d_{0,(L+1)}$, $d_{0,(L+2)}$, $d_{0,(L+N+1)}$ in der ersten Zeile und in den Spalten (L+1) bis Spalte (L+N+1) als Einstellkoeffizenten des Vorfilters P ausgelesen werden.

9. Verfahren nach einem der vorangehenden Ansprüche,
   **dadurch gekennzeichnet,**
   **daß** durch die berechneten Filterkoeffizienten ein FIR-Filter eingestellt wird.

10. Verfahren nach einem der vorangehenden Ansprüche,
    **dadurch gekennzeichnet,**
    **daß** der Entzerrer eine Entscheidungseinrichtung und einen Rückkoppelfilter aufweist, der durch die berechneten Entzerrer-Einstellkoeffizienten eingestellt wird.

11. Verfahren nach einem der vorangehenden Ansprüche 1 bis 9,
    **dadurch gekennzeichnet,**
    **daß** der Entzerrer ein Viterbi-Entzerrer ist, der durch die berechneten Entzerrer-Einstellkoeffizienten eingestellt wird.

12. Verfahren nach einem der vorangehenden Ansprüche,
    **dadurch gekennzeichnet,**
    **daß** die Empfangs-Datenpakete in einem Zeitmultiplex-Betrieb übertragen werden.

**13.** Verfahren nach einem der vorangehenden Ansprüche,
**dadurch gekennzeichnet,**
**daß** der Entzerrer ein EDGE-Entzerrer ist, der durch die berechneten Entzerrer-Einstellkoeffizienten eingestellt wird.

**14.** Verfahren nach einem der vorangehenden Ansprüche,
**dadurch gekennzeichnet,**
**daß** die Empfangsdaten nach einem DSL-Datenkommunikationsstandard über den Übertragungskanal H übertragen werden.

**15.** Verfahren nach einem der vorangehenden Ansprüche,
**dadurch gekennzeichnet,**
**daß** das Vorfilter P und der Entzerrer in Reihe geschaltet werden und einen MMSE-DFE-Entzerrer bilden.

**16.** Verfahren nach einem der vorangehenden Ansprüche,
**dadurch gekennzeichnet,**
**daß** die Filter-Einstellkoeffizienten p und die Entzerrer-Einstellkoeffizienten g derart berechnet werden, daß die BIT-Fehlerrate aufgrund von Kanalentzerrrung minimiert wird.

**17.** Verfahren nach einem der vorangehenden Ansprüche,
**dadurch gekennzeichnet,**
**daß** die Anzahl der Rechenoperationen bei der Berechnung der Einstellkoeffizienten proportional zu dem Produkt der Ordnung N des Vorfilter P und der Summe (L+N) der Ordnung des Übertragungskanals L und der Ordnung N des VorfiLlters P ist.

**Claims**

**1.** Method for channel equalization of received data which is transmitted via a transmission channel H comprising the following steps:

(a) Reception (S1) of the received data in a received data packet;

(b) Calculation (S3) of filter setting coefficients (p) for an input filter (P) and of equalizer setting coefficients (g) for an equalizer;

(c) Setting (S4) of the input filter (P) and of the equalizer using the calculated coefficients (p, g);

(d) Equalization (S5) of the received data by means of the set input filter (P) and the set equalizer;

**characterized**
**in that** channel parameters for the transmission channel (H) are determined from the received data $X_k$ (S2), and the channel parameters are stored in a data field (D), and
**in that** the filter setting coefficients (p) for the input filter (P) and the equalizer setting coefficients (g) for the equalizer are calculated by GIVENS rotation of the data field (D).

**2.** Method according to Claim 1, in which the complex channel coefficients h of the transmission channel impulse response and the signal-to-noise ratio SNR of the transmission channel H are determined approximately as channel parameters.

**3.** Method according to Claim 1 or 2,
**characterized**
**in that** the channel parameters are stored in a two-dimensional data field D, which comprises data rows and data columns and has data elements $d_{nm}$, where $0 \leq n \leq 1$ and $0- \leq m \leq N+L+1$, and where the number S of data columns depends on the order N of the input filter and the order L of the transmission channel H, and the number Z of data rows is fixed.

**4.** Method according to Claims 2 and 3,

**characterized**

**in that** the products of complex-conjugate channel coefficients h* and the square route of the signal-to-noise ratio SNR are temporarily stored as data elements in the first row of the data field D, and the complex transmission channel coefficients h of the transmission channel H are temporarily stored as data elements in the second row of the data field D.

5. Method according to one of the preceding claims,
   **characterized**
   **in that** the GIVENS rotation of the data field D is carried out in a number of GIVENS rotation steps, with the number of GIVENS rotation steps depending on the order N of the input filter P.

6. Method according to Claims 3 and 5,
   **characterized**
   **in that** each data element in the second row within the data field D is shifted by one position to the left between each GIVENS rotation step.

7. Method according to Claim 3 and Claim 5 or 6,
   **characterized**
   **in that** those data elements which are temporarily stored in the first row of the data field D after the last GIVENS rotation step are read as the calculated setting coefficients for setting the input filter P and the equalizer.

8. Method according to Claim 3 and one of claims 5 to 7,
   **characterized**
   **in that**, after the last GIVENS rotation step, the data elements $d_{01}$, $d_{02}$ ... $d_L$ in the first row and in the columns 1 to L of the data field are read as setting coefficients for the equalizer, and the data elements $d_{0,(L+1)}$, $d_{0,(L+2)}$, $d_{0,(L+N+1)}$ in the first row and in the columns (L+1) to the column (L+N+1) are read as setting coefficients for the input filter P.

9. Method according to one of the preceding claims,
   **characterized**
   **in that** an FIR filter is set by the calculated filter coefficients.

10. Method according to one of the preceding claims,
    **characterized**
    **in that** the equalizer has a decision-making device and a feedback filter, which is set by the calculated equalizer setting coefficients.

11. Method according to one of the preceding Claims 1 to 9,
    **characterized**
    **in that** the equalizer is a Viterbi equalizer, which is set by the calculated equalizer setting coefficients.

12. Method according to one of the preceding claims,
    **characterized**
    **in that** the received data packets are transmitted using a time-division multiplexing mode:

13. Method according to one of the preceding claims,
    **characterized**
    **in that** the equalizer is an EDGE equalizer, which is set by the calculated equalizer setting coefficients.

14. Method according to one of the preceding claims,
    **characterized**
    **in that** the received data is transmitted via the transmission channel H in accordance with a DSL data communications standard.

15. Method according to one of the preceding claims,
    **characterized**
    **in that** the input filter P and the equalizer are connected in series and form an MMSE-DFE equalizer.

**16.** Method according to one of the preceding claims,
**characterized**
**in that** the filter setting coefficients p and the equalizer setting coefficients g are calculated such that the BIT error rate is minimized by the channel equalization.

**17.** Method according to one of the preceding claims,
**characterized**
**in that** the number of computation operations for calculating the setting coefficients is proportional to the product of the order N of the input filter P and the sum (L+N) of the order of the transmission channel L and the order N of the input filter P.


**Revendications**

**1.** Procédé d'égalisation de canal de données de réception qui sont transmises via un canal de transmission H, avec les étapes suivantes :

(a) réception (S1) des données de réception dans un paquet de données de réception ;
(b) calcul (S3) de coefficients de réglage de filtre (p) d'un filtre préparatoire (P) et de coefficients de réglage d'égaliseur (g) d'un égaliseur ;
(c) réglage (S4) du filtre préparatoire (P) et de l'égaliseur avec les coefficients calculés (p, g) ;
(d) égalisation (S5) des données de réception par le filtre préparatoire (P) et les égaliseurs réglés ;

**caractérisé par le fait que**
on détermine (S2) des paramètres de canal du canal de transmission (H) à partir des données de réception $X_k$ et on mémorise les paramètres de canal dans un champ de données (D), et
on calcule les coefficients de réglage de filtre (p) du filtre préparatoire (P) et les coefficients de réglage d'égaliseur (g) de l'égaliseur au moyen d'une rotation GIVENS du champ de données (D).

**2.** Procédé selon la revendication 1, dans lequel on détermine approximativement comme paramètres de canal les coefficients de canal à valeur complexe h de la réponse impulsionnelle de canal de transmission et le rapport signal-bruit SNR du canal de transmission H.

**3.** Procédé selon la revendication 1 ou 2,
**caractérisé par le fait qu'**on mémorise les paramètres de canal dans un champ de données D bidimensionnel qui est constitué de lignes de données et de colonnes de données et qui contient des éléments de données $d_{nm}$, avec $0 \leq n \leq 1$ et $0 \leq m \leq N + L + 1$, le nombre S des colonnes de données dépendant de l'ordre N du filtre préparatoire et de l'ordre L du canal de transmission H et le nombre Z des lignes de données étant fixé.

**4.** Procédé selon la revendication 2 ou 3,
**caractérisé par le fait que**, dans la première ligne du champ de données D, on mémorise temporairement comme éléments de données les produits des coefficients de canal à valeur complexe conjuguée h* et de la racine du rapport signal-bruit SNR et, dans la deuxième ligne du champ de données D, on mémorise temporairement comme éléments de données les coefficients de canal de transmission à valeur complexe h du canal de transmission H.

**5.** Procédé selon l'une des revendications précédentes,
**caractérisé par le fait qu'**on effectue la rotation GIVENS du champ de données D en plusieurs pas de rotation GIVENS, le nombre des pas de rotation GIVENS dépendant de l'ordre N du filtre préparatoire P.

**6.** Procédé selon les revendications 3 et 5,
**caractérisé par le fait que**, entre chaque pas de rotation GIVENS, on déplace d'une position vers la gauche chaque élément de données de la deuxième ligne à l'intérieur du champ de données D.

**7.** Procédé selon la revendication 3 et la revendication 5 ou 6,
**caractérisé par le fait qu'**on lit comme coefficients de réglage calculés pour le réglage du filtre préparatoire P et de l'égaliseur ceux des éléments de données qui sont mémorisés temporairement après le dernier pas de rotation GIVENS dans la première ligne du champ de données D.

**8.** Procédé selon la revendication 3 et l'une des revendications 5 à 7,
**caractérisé par le fait que**, après le dernier pas de rotation GIVENS, on lit les éléments de données $d_{01}$, $d_{02}$, ..., $d_L$ dans la première ligne et dans les colonnes 1 à L du champ de données comme coefficients de réglage de l'égaliseur et les éléments de données $d_{0,(L+1)}$, $d_{0,(L+2)}$, ..., $d_{0,(L+N+1)}$ dans la première ligne et dans les colonnes (L + 1) à (L + N + 1) comme coefficients de réglage du filtre préparatoire P.

**9.** Procédé selon l'une des revendications précédentes,
**caractérisé par le fait qu'**on règle un filtre FIR au moyen des coefficients de filtre calculés.

**10.** Procédé selon l'une des revendications précédentes,
**caractérisé par le fait que** l'égaliseur comporte un dispositif de décision et un filtre de rétroaction qui est réglé au moyen des coefficients de réglage d'égaliseur calculés.

**11.** Procédé selon l'une des revendications précédentes 1 à 9,
**caractérisé par le fait que** l'égaliseur est un égaliseur de Viterbi qui est réglé au moyen des coefficients de réglage d'égaliseur calculés.

**12.** Procédé selon l'une des revendications précédentes,
**caractérisé par le fait qu'**on transmet les paquets de données de réception en multiplexage temporel.

**13.** Procédé selon l'une des revendications précédentes,
**caractérisé par le fait que** l'égaliseur est un égaliseur EDGE qui est réglé au moyen des coefficients de réglage d'égaliseur calculés.

**14.** Procédé selon l'une des revendications précédentes,
**caractérisé par le fait qu'**on transmet les données de réception selon un standard de communication de données DSL via le canal de transmission H.

**15.** Procédé selon l'une des revendications précédentes,
**caractérisé par le fait que** le filtre préparatoire P et l'égaliseur sont branchés en série et forment un égaliseur MMSE-DFE.

**16.** Procédé selon l'une des revendications précédentes,
**caractérisé par le fait qu'**on calcule les coefficients de réglage de filtre p et les coefficients de réglage d'égaliseur g de telle sorte que le taux d'erreur sur les bits est minimisé en raison de l'égalisation de canal.

**17.** Procédé selon l'une des revendications précédentes,
**caractérisé par le fait que** le nombre des opérations de calcul lors du calcul des coefficients de réglage est proportionnel au produit de l'ordre N du filtre préparatoire P et de la somme (L + N) de l'ordre L du canal de transmission et de l'ordre N du filtre préparatoire P.

Fig.1

Fig.2

Fig.3

Fig.4

Fig.5

Fig.6